# EUROPÄISCHE PATENTANMELDUNG

(11) **EP 1 044 658 A1**
(43) Veröffentlichungstag der Anmeldung: **18.10.2000**
(21) Anmeldenummer: 00810142.0
(22) Anmeldetag: 21.02.2000
(51) Int. Cl.: A61C 5/12, C22F 1/18

(54) **Matrize**

(30) Priorität: 05.03.1999 CH 41599
(71) Anmelder: Hawe Neos Dental Dr. H. v. Weissenfluh SA, 6934 Bioggio (CH)
(72) Erfinder: Kilcher, Beat, 6935 Bosco Luganese (CH); Wiessenfluh, Beat A. V., 6925 Gentilino (CH)
(74) Vertreter: AMMANN PATENTANWAELTE AG BERN

(57) **Zusammenfassung**

Matrizen zur Anwendung in der Dentalmedizin aus metallischem Werkstoff auf Titanbasis, insbesondere aus Titan selbst, bieten gegenüber konventionellen Stahlmatrizen eine bessere Anpassungsfähigkeit an Zahnoberflächen. Füllungen, insbesondere aus Kunststoff, die unter Verwendung von Titanmatrizen hergestellt werden, können daher besser an eine vorgegebene, insbesondere die natürliche Topographie eines Zahnes angepasst werden.

## Beschreibung

Die vorliegende Erfindung bezieht sich auf eine Matrize zur Anwendung in der Dentalmedizin gemäss Oberbegriff des Anspruchs 1.

Bekannt sind Matrizen aus Stahl, zum Beispiel im wesentlichen in Form Von dünnen Stahlbändern, die dazu dienen, das Ausfliessen von Füllmaterial aus dem präparierten Zahn zu verhindern. Unter anderen bestände sonst die Gefahr, dass das Füllmaterial mit benachbarten Zähnen unkontrolliert in Kontakt kommen und den zu therapierenden Zahn mit den benachbarten verkleben würde. Auch ist es vorteilhaft, wenn insbesondere bei grösseren Füllungen, die auch Telle der Wände eines Zahnes ersetzen müssen, die natürliche Obenfläche des Zahnes nachgebildet und u.a. der Kontaktpunkt aufgebaut wird.

Bei dem konventionell als Füllmaterial verwendeten Amalgam muss für eine einwandfreie Füllung und einen dichten Verschluss der Kavität das Füllmaterial mit relativ hohen Druck in die Zahnhöhlung gestopft werden. Die bekannten Matrizen bestehen daher aus Stahl, um zum einen diesen hohen Stopfdruck standhalten zu können und andererseits mit genügend grossem Zug, d. h. Anpressdruck, um den Zahn gelegt werden zu können, um einen dichten Verschluss zu gewährleisten und das Hinauspressen von Füllmaterial sicher weitgehendst zu verhindern.

Nachteilig an den bekannten Stahlmatrizen ist jedoch, dass sie nur eine begrenzte Anpassungsfähigkeit an die Form der Zahnoberfläche aufweisen. Die Oberflächen der Füllungen, soweit von der Matrize vorgegeben, gehorchen daher nicht der natürlichen und regelmässig anzustrebenden Oberflächenform des Zahnes. Vielmehr ergeben sich glatte Oberflächen und an den Übergängen Grate oder scharfe Kanten. Zur Beseitigung dieser nachteiligen Erscheinungen muss eine zeitraubende und damit kostspielige Nachbearbeitung vorgenommen werden. Eine andere Gefahr bei der Verwendung von Stahlmatrizen besteht darin, dass dünne Zahnseitenwände unter der hohen Zugspannung der Stahlmatrizen zusammenbrechen bzw. die Stahlmatrizen Von den Zahnwänden abrutschen.

Eine Aufgabe der vorliegenden Erfindung besteht daher darin, eine Matrize anzugeben, die eine Verbesserung hinsichtlich mindestens eines der vorstehend genannten Probleme bietet.

Eine solche Matrize ist im Anspruch 1 angegeben. Bevorzugte Ausführungsformen sind in den folgenden Ansprüchen definiert.

Die Entwicklung in der Kariestherapie geht neuerdings weg von Amalgam, unter anderem in Richtung Kunststoffüllungen. Das Füllen eines Zahnes mit einem Kunststoffmaterial erfolgt unter wesentlich geringerem Druck. Gemäss der Erfindung wird daher, bevorzugt bei Kunststoffüllungen, eine Matrize aus Titan oder einem auf Titan basierenden metallischen Werkstoff (Legierung) verwendet. Ein grosser Vorteil von Titan ist dabei, dass sich seine Anwendungsparameter (Festigkeit, Streckgrenze usw.) durch die Vorbehandlung in einem weiten Bereich kontinuierlich einstellen lassen. Zwei derartige Vorbehandlungsmethoden sind die thermische Vorbehandlung und die Kaltbearbeitung.

In Versuchen wurden so Matrizen aus Titan mit Zugfestigkeiten von 390 - 520 N/mm² bzw. 290 - 410 N/mm² erhalten, also ein relativ weiter Bereich kontinuierlich überstrichen. Zum Vergleich ist es mit dem für Stahlmatrizen üblichen Stahl nur möglich, entweder sehr weichen Stahl (Streckgrenze ca. 520 N/mm²) oder sehr harten Stahl (Zugfestigkeit 1130 - 1280 N/mm²) zu erhalten, wobei zwischen den Werten eine beträchtliche Lücke klafft.

Titan ist darüber hinaus physiologisch unbedenklich, insbesondere hinsichtlich der Allergiegefahr, und nicht toxisch. Die Matrizen aus Titan haben sich auch als sehr gut anpassbar an eine gewünschte dreidimensionale Oberflächenform erwiesen, d. h. die Matrizen konnten nach Anbringen an Zahn noch mechanisch geformt werden. Titan genügt im übrigen auch anderen, mehr technischen Anforderungen dieser Anwendung, unter anderen weisen die Matrizen auf Titanbasis eine ausreichende Kantenfestigkeit des Matrizenbandes auf, die nötig ist, um dieses auch zwischen fest aneinander anstossende Zähne einschieben zu können, und das Matrizenband kann trotzdem hinreichend dünn ausgeführt werden, um einerseits wieder das Einschieben in die Zahnzwischenräume zu ermöglichen und andererseits eine gute, nachträgliche Formbarkeit zur Anpassung an eine gewünschte Zahnoberfläche beizubehalten.

Abwandlungen der beschriebenen Erfindung sind dem Fachmann eingängig, ohne den Bereich der Erfindung zu verlassen. Denkbar ist zum Beispiel die Verwendung von Titanlegierungen neben reinem Titan.

## Patentansprüche

1. Matrize zur Anwendung in der Dentalmedizin, insbesondere der Kariestherapie, dadurch gekennzeichnet, dass sie aus metallischem Material mit dem überwiegenden Bestandteil Titan besteht.

2. Matrize gemäss Anspruch 1, dadurch gekennzeichnet, dass sie aus im wesentlichen reinein Titan besteht.

3. Matrize gemäss Anspruch 1 oder 2, dadurch gekennzeichnet, dass die Zugfestigkeit maximal 520 N/mm² beträgt.

4. Matrize gemäss Anspruch 3, dadurch gekennzeichnet, dass die Zugfestigkeit maximal 410 N/mm² beträgt.

5. Verfahren zur Herstellung einer Matrize gemäss einem der Ansprüche 1 - 4, dadurch gekennzeichnet, dass durch thermische Vorbehandlung und/oder Kaltbearbeitung eine Einstellung der mechanischen Parameter erfolgt, insbesondere Von Zugfestigkeit, Streckgrenze und/oder Bruchdehnung.

6. Verwendung der Matrize gemäss einem der Ansprüche 1 bis 4 beim Füllen eines Zahnes mit Füllmaterial auf Kunststoffbasis.
